# EUROPEAN PATENT APPLICATION

(11) **EP 4 624 240 A1**
(43) Date of publication of application: **01.10.2025**
(21) Application number: 24166809.4
(22) Date of filing: 27.03.2024
(51) Int. Cl.: B60L 58/24, B60L 58/26

(54) **BATTERY SYSTEM WITH LIQUID-COOLED BATTERY PACK**

(71) Applicant: VOLVO TRUCK CORPORATION, 405 08 Göteborg (SE)
(72) Inventor: MCCARTHY, Benjamin, 439 55 ÅSA (SE); AHMED, Istaq, 422 44 GÖTEBORG (SE); BARBIERI, Romulo, 422 55 HISINGSBACKA (SE)
(74) Representative: Ström & Gulliksson AB

(57) **Abstract**

A battery system (**100**) is presented. The battery system (**100**) comprises a liquid-cooled battery pack (**110**) and a compressed air supply (**105**) connected to a high pressure inlet valve (**113**) of the battery pack (**110**) and connectable to an air-controlled brake system (**14**) of a vehicle (**10**), wherein the battery system (**100**) is configured to control an internal pressure (**Pᵢ**) of the battery pack (**110**) to be greater than an ambient air pressure (**Pₐ**).

## Description

### TECHNICAL FIELD

The disclosure relates generally to battery systems. In particular aspects, the disclosure relates to battery systems comprising liquid-cooled battery packs. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack is a collection of individual batteries or cells assembled together to provide electrical energy for various devices or applications. These packs are commonly used in electronic devices, electric vehicles, renewable energy systems, and portable power sources.

Generally, during discharge (or charging in case of re-chargeable battery packs) of a battery pack heat may be generated. In order to provide a suitable operating temperature for battery packs, some form of thermal management system is generally provided to cool the battery pack. It is common in battery system for commercial vehicles is to use a liquid coolant as a heat exchange medium
To avoid leakage of coolant into the battery pack, battery packs are generally sealed. If sealing of a battery pack is compromised for one reason or another, contaminants such as coolant, water or dust may leak from the battery pack reducing performance of the battery pack.

### SUMMARY

According to a first aspect of the disclosure, a battery system is presented. The battery system comprises a liquid-cooled battery pack and a compressed air supply connected to a high pressure inlet valve of the battery pack and connectable to an air-controlled brake system of a vehicle, wherein the battery system is configured to control an internal pressure of the battery pack to be greater than an ambient air pressure. The first aspect of the disclosure may seek to reduce a risk that contaminants enter a battery pack in case a sealing of the battery pack is compromised. A technical benefit may include increasing a lifetime of the battery back and reducing a risk that flammable contaminants enter the battery pack causing smoke or even fires.

Optionally in some examples, including in at least one preferred example, the battery pack comprises a pressure relief valve configured to open responsive to the internal pressure of the battery pack being above a pressure relief threshold, and the battery system is further configured to control the internal pressure of the battery pack to be below the pressure relief threshold. A technical benefit may include enabling a controlled over pressure inside the battery pack in combination with a pressure relief valve.

Optionally in some examples, including in at least one preferred example, the internal pressure of the battery pack is controlled by a pressure reducing valve arranged between and in fluid connection with the compressed air supply and the high pressure inlet valve. A technical benefit may include reducing a cost for the battery pack as requirements, of e.g. maximum pressure tolerance of the battery pack, may be reduced.

Optionally in some examples, including in at least one preferred example, the battery system is further configured to control the internal pressure of the battery pack to be greater than a predetermined internal pressure of a cooling liquid of a cooling system configured to cool the battery pack. A technical benefit may include ensuring that coolant does not leak into the battery pack even in cases where e.g. an outer wall of coolant lines also serve as an inner wall for a housing of the battery pack.

Optionally in some examples, including in at least one preferred example, the battery pack further comprises a controllable outlet valve and the battery system is further configured to control the controllable outlet valve to controllably release air from the battery pack. A technical benefit may include enabling a controlled evacuation of air from the battery pack. For instance, at startup, air of the battery pack may be replaced to ensure that air inside the battery pack is dry.

Optionally in some examples, including in at least one preferred example, the controllable outlet valve is arranged at an, during use, vertically lower portion of the battery pack to allow draining of moisture from the battery pack. A technical benefit may include enabling a controlled evacuation (release) of not only air from the battery pack, but also any liquid accumulated (from e.g. condensation) inside the battery pack.

Optionally in some examples, including in at least one preferred example, the battery system further comprises processing circuitry configured to control the internal pressure of the battery pack. A technical benefit may include enabling, an at least partly, computerized control of the battery system.

Optionally in some examples, including in at least one preferred example, the battery system further comprises a pressure relief valve configured to open responsive to the internal pressure of the battery pack being above a pressure relief threshold, and the battery system is further configured to control the internal pressure of the battery pack to be below the pressure relief threshold; the internal pressure of the battery pack is controlled by a pressure reducing valve arranged between and in fluid connection with the compressed air supply and the high pressure inlet valve; the high pressure air supply comprises an air dryer; the battery system is configured to control the internal pressure of the battery pack to be greater than a predetermined internal pressure of a cooling liquid of a cooling system configured to cool the battery pack; the battery pack further comprises a controllable outlet valve and the battery system is further configured to control the controllable outlet valve to controllably release air from the battery pack; the controllable outlet valve is arranged at an, during use, vertically lower portion of the battery pack to allow draining of moisture from the battery pack; the battery system further comprising processing circuitry configured to control the internal pressure of the battery pack. A technical benefit may include all benefits listed above.

According to a second aspect of the disclosure, a vehicle is presented. The vehicle comprises a battery system of the first aspect and an air-controlled brake system wherein a reservoir tank of the air-controlled brake system is operatively connected to the compressed air supply of the battery system. The second aspect of the disclosure may seek to reduce a risk that contaminants enter a battery pack in case a sealing of the battery pack is compromised. A technical benefit may include increasing a lifetime of the battery back and reducing a risk that flammable contaminants enter the battery pack causing smoke or even fires.

Optionally in some examples, including in at least one preferred example, the vehicle is a heavy-duty vehicle.

According to a third aspect of the disclosure, a method for controlling an internal pressure of a liquid-cooled battery pack is presented. The method comprises providing high pressure air from a compressed air tank of an air-controlled brake system of a vehicle to a high pressure inlet valve of the battery pack, and controlling the internal pressure of the battery pack to be greater than an ambient air pressure. The third aspect of the disclosure may seek to reduce a risk that contaminants enter a battery pack in case a sealing of the battery pack is compromised. A technical benefit may include increasing a lifetime of the battery back and reducing a risk that flammable contaminants enter the battery pack causing smoke or even fires.

Optionally in some examples, including in at least one preferred example, the battery pack comprises a pressure relief valve configured to open responsive to the internal pressure of the battery pack being above a pressure relief threshold. The method further comprises controlling the internal pressure of the battery pack to be below the pressure relief threshold. A technical benefit may include enabling a controlled over pressure inside the battery pack in combination with a pressure relief valve.

Optionally in some examples, including in at least one preferred example, the battery pack further comprises a controllable outlet valve. The method further comprises controlling the controllable outlet valve to controllably release air from the battery pack. A technical benefit may include enabling a controlled evacuation of air from the battery pack. For instance, at startup, air of the battery pack may be replaced to ensure that air inside the battery pack is dry.

Optionally in some examples, including in at least one preferred example, the method further comprises controlling the internal pressure of the battery pack to be greater than a predetermined internal pressure of a cooling liquid (a coolant) of a cooling system configured to cool the battery pack. A technical benefit may include ensuring that coolant does not leak into the battery pack even in cases where e.g. an outer wall of coolant lines also serve as an inner wall for a housing of the battery pack.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary schematic view of a vehicle according to an example.
**FIG. 2** is an exemplary schematic view of an air-controlled brake system according to an example.
**FIG. 3** is an exemplary schematic view of a battery system according to an example.
**FIG. 4** is an exemplary schematic view of a battery system according to an example.
**FIG. 5** is an exemplary schematic view of a method according to an example.
**FIG. 6** is an exemplary schematic view of a computer program product according to an example.
**FIG. 7** is an exemplary schematic view of a computer program product being loaded onto processing circuitry according to an example.

### DETAILED DESCRIPTION

The detailed description set forth below provides information and examples of the disclosed technology with sufficient detail to enable those skilled in the art to practice the disclosure.

Battery packs are made up of battery cells, battery cells have a narrow ideal range of operational temperature to provide maximum performance and lifetime whilst ensuring safe use. Further, as mentioned, battery cells generate heat during discharge and charge. To this end, battery packs are provided with a thermal management system to cool the battery pack down or heat the battery pack up in order to keep the battery pack within the ideal range of operational temperature. Most commonly on commercial vehicle battery application, is to use liquid coolant as the heat exchange medium. Liquid coolant is circulated inside the pack through a coolant circuit comprising of pipes, connectors, valves, heat exchangers, etc. The liquid coolant is, most commonly, made of a mix of glycol and pure water. As a result, the coolant may conduct electricity, so the contact of coolant with components under voltage may lead to short circuit and/or current leakage. Short circuit inside a battery pack is a safety issue as it may damage the battery cell. Therefore, the internal coolant circuit must be tight in order to prevent coolant leakage inside the battery pack. The safety issues may occur due to ingress of ambient water or dust. To this end a battery pack, specifically a battery pack of a vehicle, is generally substantially hermetically sealed to avoid contaminants from entering the battery pack.

Even with a substantially sealed system, e.g. liquid/moisture may, due to vibrations, cracks in a housing etc. be present within the battery pack even if a very complex and expensive seal is provided. Moisture may condense or reach a level where it interacts with electrical components of the battery pack risking undesired and unforeseen dangerous consequences. Such challenges may be addressed by increasing a strength and durability of the battery pack and/or by mounting the battery pack at a protected location to avoid damage and contaminants. However, such solutions are generally costly and may trade off efficiency and performance in order to reduce a risk of compromising the seal of the battery pack.

Some solutions may involve filling the battery pack with fire retardant foam to limit the available space for moisture to accumulate. Although such actions at least to a part addresses moisture problems, it makes for difficult or impossible service of the battery pack and increases costs and weight (and thereby energy consumption if used onboard a vehicle) of the battery pack.

Another solution is to create areas within the battery pack where the moisture can accumulate wherefrom moisture may be provided to a drain. However, such solutions introduce unnecessary packaging constraints and inefficiencies.

The present disclosure will present a solution that is simple to implement and cost-efficient. The solution is implementable in a vehicle with only minor modifications required to sealing of battery packs and utilization of components and devices already available at the vehicle.

By controlling an internal pressure of a battery pack to be above an ambient pressure, contaminants will be prevented from entering the battery pack. A pressure inside the battery pack (internal pressure) is increased by connecting the battery pack to an air supply of a brake system of the vehicle. The brake system will provide a steady, secure, reliable and substantially endless supply of dry pressurized air for the battery pack. Even if the sealing of the battery pack is compromised, operation of the battery pack may be allowed as a risk of e.g. coolant (in case of a liquid-cooled battery pack) or other contaminants leaking into the battery pack is reduced.

Compared to e.g. the foam solution mentioned above, a foam introduces air gaps into which humid air may leak if a seal of the battery pack is damaged, high pressure air (air above ambient pressure) will prevent moist air from entering the battery pack.

Providing a drain of the battery pack and areas for condensation to accumulate generally still allow condensation to form at any inside the battery pack before it is directed (by e.g. gravity) to specific locations at the drain. This subjects an inside of the battery pack to moisture, albeit for a shorter time period, but the risk of damage, corrosion etc. is still increased compared to using high pressure air which will prevent moist air from entering the battery pack.

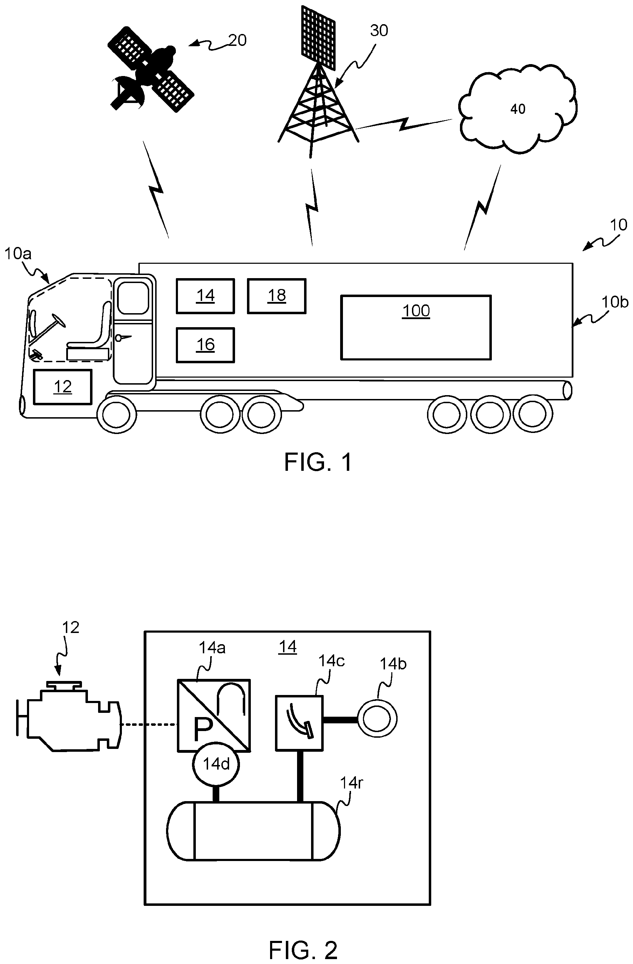

**FIG. 1** is an exemplary schematic side view of a heavy-duty vehicle **10** (hereinafter referred to as vehicle **10**) compatible with the teachings of the present disclosure. The vehicle **10** comprises a tractor unit **10a** which is arranged to tow a trailer unit **10b.** In other examples, other vehicles may be employed, e.g., trucks, buses, and construction equipment. The vehicle **10** comprises all vehicle units and associated functionality to operate as expected, such as a powertrain, chassis, and various control systems. The vehicle **10** comprises one or more propulsion sources **12.** The propulsion source **12** may be any suitable propulsion source **12** exemplified by, but not limited to, one or more or a combination of an electrical motor, a combustion engine such as a diesel, gas or gasoline powered engine. The vehicle **10** further comprises an energy source **100** suitable for providing energy for the propulsion source **12.** That is to say, if the propulsion source **12** is an electrical motor, a suitable energy source **100** would be a battery pack or a fuel cell. The vehicle **10** further comprises a brake system **14,** preferably an air-controlled brake system **14.** The vehicle **10** may further comprise sensor circuitry **16** arranged to detect, measure, sense or otherwise obtain data relevant for operation of the vehicle **10** including devices and systems connected to the vehicle **10.** The sensor circuit **16** may comprise one or more of an accelerometer, a gyroscope, a wheel Speed Sensor, an ABS sensor, a throttle position sensor, a fuel level sensor, a temperature Sensor, a pressure sensor, a rain sensor, a light sensor, proximity sensor, a lane departure warning sensor, a blind spot detection sensor, a TPMS sensor etc. Operational data relevant for operation of the vehicle **10** may include, but is not limited to, one or more of a speed of the vehicle **10,** a weight of the vehicle **10,** an inclination of the vehicle **10,** a status of the energy source **100** of the vehicle **10** (state of charge, fuel level etc.), a current speed limit of a current road travelled by the vehicle **10,** air-brake pressure etc. The vehicle **10** may further comprise communications circuitry **18** configured to receive and/or send communication. The communications circuitry **18** may be configured to enable the vehicle **10** to communicate with one or more external devices or systems such as a cloud server **40.** The communication with the external devices or systems may be directly or via a communications interface such as a cellular communications interface **30,** such as a radio base station. The cloud server **40** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **18** may, additionally or alternatively, be configured to enable the vehicle **10** to be operatively connected to a Global Navigation Satellite System (GNSS) **20** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **10** may be configured to utilize data obtain from the GNSS **20** to determine a geographical location of the vehicle **10.**

As mentioned, the brake system **14** of the vehicle **10** is preferably an air-controlled brake system **14.** Air-controlled brake systems **14,** commonly known as air brake systems, are typically used in heavy-duty vehicles such as trucks, buses, and commercial vehicles. An exemplary air-controlled brake system **14** is shown in **FIG. 2****.** The air-controlled brake system **14** of **FIG. 2** operates using compressed air to control the application and release of brakes **14b** of the vehicle **10.** Air-controlled brake system **14** are commonly known and will not be excessively explained, but generally comprise, in addition to the brakes **14b** (brake actuators comprising brake chambers, release mechanisms etc.) and controllers **14c** (brake pedal etc.), an air compressor **14a** and a reservoir tank **14r.** The air compressor **14a** is generally driven by the vehicle's propulsion source **12.** The air compressor **14a** pressurizes air from the atmosphere, generating compressed air that is stored in the reservoir tank **14r** (also known as air tank). The reservoir tank **14r** serves as a storage vessel for the compressed air and ensures a steady and reliable air supply to the brake system **14.** Generally, air-controlled brake systems **14** comprise and emergency brake system (not shown in **FIG. 2**) as a safety feature. In the event of a loss of air pressure or other failure in the system, the emergency brake system is automatically activated to engage the brakes and bring the vehicle to a stop. An air-controller brake system **14** is generally configured such that the brakes **14a** are activated upon release of air pressure, and de-activated by applying air pressure. As an effect, if the compressed air system fails, i.e. no compressed air available, release of the brakes will be prevented and propelling of the vehicle **10** prohibited.

The air-controlled brake system **14** is, in other words, a safety critical feature of vehicles and propulsion of the vehicle without compressed air will not be possible. Consequently, a system may safely rely on the presence of compressed air from the air-controlled brake system **14** during operation of the vehicle **10.**

In order to extend a lifetime and ensure efficiency of the air compressor **14a,** the air compressor **14a** is generally provided with one or more air dryers **14d** arranged to remove moisture and contaminants from the compressed air before it enters the brake system. Air dryers **14d** are typically installed between the air compressor **14a** and the air reservoir **14r.** The air dryer **14d** of the air-controlled brake system **14** may be of any suitable type. One common type of air dryer **14d** uses desiccant materials such as silica gel or activated alumina to absorb moisture from the compressed air. Another type of air dryer **14d** utilizes coalescing filters to remove water droplets and oil mist from the compressed air. These filters consist of fine fibers that capture and trap moisture and oil particles as the air passes through them. Some air dryers **14d** employ heat exchangers to cool the compressed air, causing the moisture to condense and separate from the air stream. The condensed water is then drained out of the system, leaving behind dry, clean air. The air dryer **14d** may very well be a combination of different types of air dryers **14d.**

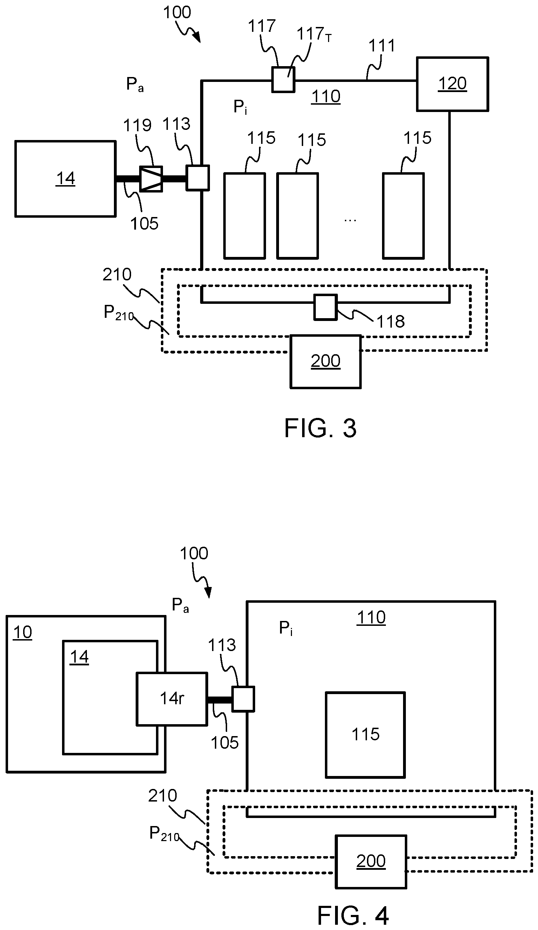

In **FIG. 3****,** an exemplary schematic view of an energy source **100** in the form of a battery system **100** is shown. The battery system **100** comprises at least one battery pack **110** (only one shown in **FIG. 3**). The battery pack **110** may be any suitable battery pack **110** and may comprise one or more battery cells **115.** In **FIG. 3****,** the battery system **100** comprises three battery cells **115** but this is for illustrative purposes and the battery system **100** may comprise any number of battery cells **115.** The battery pack **110** further comprises a housing **111** for sealing the battery pack **110.** The housing **111** of the battery pack **110** may be any suitable housing and may be chosen depending on e.g. specific applications, requirements and/or an expected operational environment of the battery pack **110.** In some examples, the housing **111** may be a metal casing, a plastic casing or casing comprised both of metal and plastic or other types of custom enclosures for the battery cells **115.** In some examples, the battery cells **115** may be provide with cell casing (not shown) and such cell casing may correspond to the housing **111** but may be provided as soft or flexible pouches or casings. The teaching of the present disclosure may be applied also to suitable battery cell cases.

Some battery packs **110,** specifically high-performance battery packs, such as those used in electric vehicles or grid-scale energy storage, often incorporate connections to a cooling systems **200** at their housing **111** to manage temperature and optimize performance and lifespan of the battery pack **110.** The cooling system **200** may by an external cooling system **200** such as shown in **FIG. 3****,** or integrated within the housing **111.** The cooling system **200** of **FIG. 3** is a liquid cooling system comprising coolant lines **210** connected to the battery pack **110.** The coolant lines **210** function as conduits for coolant with which the battery pack **110** may exchange heat. Coolant lines **210** may extend through the housing **111** of the battery pack **110** and/or be connected/arranged in a vicinity of the battery pack **110.** The coolant lines **210** may comprise, be formed as, and/or connected to heat exchangers (e.g. cooling plates) arranged to exchange heat with the battery pack **110.** Additionally, or alternatively, coolant lines **210** and/or heat exchangers may be incorporated in the housing **111** of the battery pack **110.** A battery pack **110** connected to, or comprising, liquid cooling system **200** is referred to as a liquid-cooled battery pack **110.** A battery pack **110** connected to a cooling system **200** providing liquid-cooling may be referred to as a liquid-cooled battery pack **110.**

The battery pack **110** further comprises a high pressure inlet valve **113.** The high pressure inlet valve **113** may be arranged as a connection through the housing **111** of the battery pack **110.** The high pressure inlet valve **113** is connected to a compressed air supply **105** provided to enable operative connection of the battery pack **110** to a supply of compressed air. In **FIG. 3** the compressed air supply **105** is connected to an air-controlled brake system **14** such as the air-controlled brake system of **FIG. 2****.** The compressed air supply **105** is preferably connected to an outlet of the reservoir tank **14r** of the air-controlled brake system **14.** It should be mentioned that, although named high pressure inlet valve **113,** valve functionality is not required by the high pressure inlet valve **113,** the high pressure inlet valve **113** may, in some examples, be a connector to enable connection of the battery pack **110** to the compressed air supply **105.** In some examples, the high pressure inlet valve **113** is a pressure-controlling valve configured to control an internal pressure **Pᵢ** of the battery pack **110** to be greater than an ambient air pressure **Pₐ** of the battery pack **110.**

Generally, a pressure of the compressed supply air is greater than a wanted internal pressure **Pᵢ** of the battery pack **110.** To this end, the battery system **100** may comprise a pressure-reducing valve **119** arranged between the compressed supply and the housing **111.** Alternatively, or additionally, the high pressure inlet valve **113** may comprise the pressure-reducing valve **119.** The pressure reducing valve **119** may be configured to reduce a pressure provided via the compressed air supply **105,** e.g. a pressure of the reservoir tank **14r** of the air-controlled brake system **14,** to a lower pressure manageable by housing **111** of the battery pack **110,** but greater than the ambient pressure **Pₐ** of the battery pack **110.** The pressure-reducing valve **119** may be any suitable pressure-reducing valve **119** such as, but not limited to direct-acting pressure reducing valves (comparably simple, reliable devices that operate based on the balance between the downstream pressure and a spring force), pilot-operated pressure reducing valves (valves using a pilot valve to control the main valve, providing greater accuracy and sensitivity to changes in pressure where the pilot valve senses the downstream pressure and modulates the main valve to maintain a desired pressure setpoint), diaphragm pressure reducing valves (valves using a flexible diaphragm to control the flow of air and maintain the desired pressure downstream) etc.

In some examples, the pressure-reducing valve **119** and/or the high pressure inlet valve **113** is a controllable valve; such that the control of the internal pressure **Pᵢ** of the battery pack **110** to be greater than an ambient air pressure **Pₐ** of the battery pack **110** may be selective. Additionally, or alternatively, the pressure-reducing valve **119** and/or the high pressure inlet valve **113** is a controllable valve such that the internal pressure **Pᵢ** of the battery pack **110** may be controlled to a configurable wanted internal pressure **Pᵢ** of the battery pack **110.**

In some examples, the battery pack **110** further comprises a pressure relief valve **117.** The pressure relief valve **117** is generally provided through the housing **111** of the battery pack **110.** The pressure relief valve **117** may be configured to serve as a safety mechanism to protect the battery pack **110** and surrounding components from damage due to overpressure conditions. Generally, a primary purpose of a pressure relief valve in a battery pack **110** is to prevent the buildup of excessive internal pressure, which can occur during abusive conditions such as overcharging, external short circuits, or thermal runaway. The pressure relief valve **117** is configured to open and allow gases to pass from an inside of the housing **111** to an outside of the housing **111.** The pressure relief valve is configured to open responsive to the internal pressure **Pᵢ** of the battery pack **110** exceeding a pressure relief threshold **117_{T}** of the pressure relief valve **117.** If the battery pack **110** is provided with a pressure relief valve **117,** the pressure inlet valve **113** is preferably configure to provide the internal pressure **Pᵢ** of the battery pack **110** to be lower than the pressure relief threshold **117_{T}** and above the ambient air pressure **Pₐ** of the battery pack **110.**

It should be mentioned that the internal pressure **Pᵢ** of the battery pack **110** may very well be greater than the pressure relief threshold **117_{T}**. This will cause air from the compressed air supply, e.g. the reservoir tank **14r** of the air-controlled brake system **14,** to enter the hosing **111** through the pressure inlet valve **113** and escape the housing **111** through the pressure relief valve **117.** This allows exchange of air inside the battery pack **110** and evacuation of e.g. moisture, contaminants etc. from the battery pack **110.** In some examples, the pressure-reducing valve **119** and/or the high pressure inlet valve **113** is a controllable valve as mentioned above; and the controllable pressure-reducing valve **119** and/or the controllable high pressure inlet valve **113** may be controlled to selectively provide the internal pressure **Pᵢ** of the battery pack **110** to be lower than the pressure relief threshold **117_{T}** and above the ambient air pressure **Pₐ** of the battery pack **110,** or above the pressure relief threshold **117_{T}**. This provides selective evacuation of air from the battery pack **111.**

Optionally, the battery pack **110** may be provided with an outlet valve **118.** Preferably, the outlet valve **118** is a controllable outlet valve **118.** The outlet valve **118** enables selective evacuation of air from the battery pack **111.** In some examples, the outlet valve **118** is arranged at a vertically low, preferably at a vertically lowest, portion of the battery pack **110.** Having the outlet valve **118** at a lower portion of the battery pack **110** (or the housing **111** of the battery pack **110**), allows draining of liquid and moisture from battery pack **110,** i.e. an interior of the housing **111.**

Although the functionality of the battery system **120** outlined above may be provided wholly by hardware components such as valves etc., control of these valves may, as indicated above, in some examples be configurable. To this end, the battery system **100** may further comprise (or be operatively connected to) processing circuitry **120.** The processing circuitry **120** may be any suitable processing circuitry configured to control the internal pressure **Pᵢ** of the battery pack **110.** The processing circuitry **120** may be configured to control the internal pressure **Pᵢ** of the battery pack **110** by engaging the high pressure inlet valve **113,** the pressure-reducing valve **119** and/ or the outlet valve **118.** In some examples, the processing circuitry **120** is operatively connected to the air-controlled brake system **14** and configured to control the air-controlled brake system **14** to provide the internal pressure **Pᵢ** of the battery pack **110.**

It should be mentioned that the battery pack **110** may very well comprise further devices and/or features such as, but not limited to, one or more controllers, sensors, connectors, further safety features etc.

Providing an internal pressure **Pᵢ** of the battery pack **110** to be above an ambient air pressure **Pₐ** of the battery pack **110** will prevent contaminants, moisture etc. to leak into the battery pack **110** if the housing **111** is damaged. Further to this, in case of a liquid-cooled battery pack **110,** if the coolant lines **210** of a liquid cooling system **200** are damaged, coolant will be prevented from leaking into the battery pack **110.** If walls of the coolant lines **210** form walls of the housing **110,** air may leak into the liquid cooling system **200** rather than coolant leaking into the battery pack **110.** Air in the cooling system **200** is generally easier to detect and less hazardous than coolant inside the battery pack **110.** It should be mentioned that, in cases where the walls of the coolant lines **210** form walls of the housing **110,** the high pressure inlet valve **113** is preferably configured to provide the internal pressure **Pᵢ** of the battery pack above an internal pressure of the coolant lines **P₂₁₀**, specifically if the internal pressure of the coolant lines **P₂₁₀** is greater than the ambient air pressure **Pₐ** of the battery pack **110** which is generally the case.

In **FIG. 4****,** one preferred example of a battery system **100** is shown. The battery system **100** comprises a liquid-cooled battery pack **110** and a compressed air supply **105** connected to a high pressure inlet valve **113** of the battery pack **110** and connectable to an air-controlled brake system **14** of a vehicle **10.** The battery system **100** is configured to control an internal pressure **Pᵢ** of the battery pack **110** to be greater than an ambient air pressure **Pₐ**.

The battery system **100** of **FIG. 4** may be modified to comprise any of the features indicated, or reduced by removal of any of the features indicated as optional, in reference to **FIG. 3****.** In some examples, the battery pack **110** is connected to the air-controlled brake system **14** of a vehicle **10.** In some examples, the battery pack **110** comprises the air-controlled brake system **14** of a vehicle **10.**

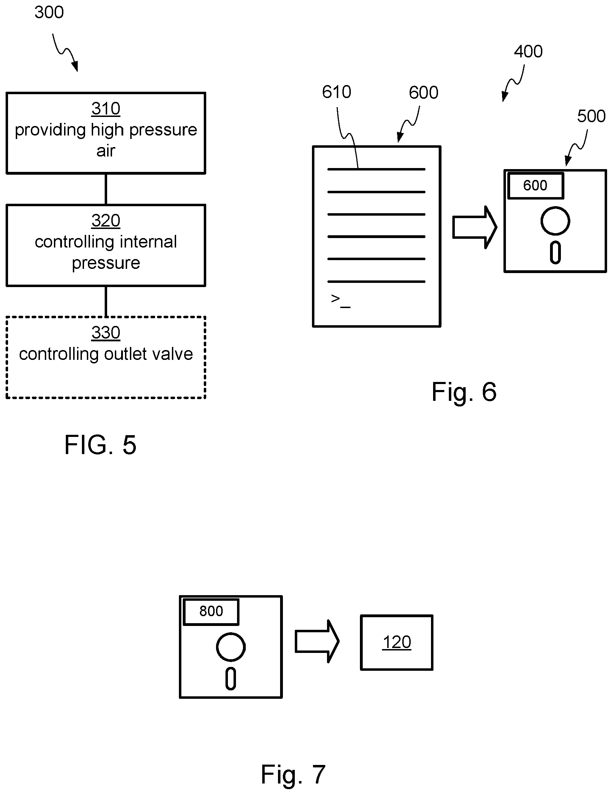

With reference to **FIG. 5****,** a schematic view of a method **300** according to the present disclosure is shown. The method **300** may be a partly or wholly computer implemented method **300.** The processing circuitry **120** of the battery system **100** or processing circuitry of the vehicle **10** operatively connected to the battery system **100** may be configured to perform and/or cause performance of some or all features of the method **300.**

The method **300** may be described as a method **300** for controlling an internal pressure **Pᵢ** of a battery pack **110** to be greater than an ambient air pressure **Pₐ** of the battery pack **110.** To this end, the method comprises providing **310** high pressure air from a compressed air tank **14r** of an air-controlled brake system **14** of a vehicle **10** to a high pressure inlet valve **113** of the battery pack **110.** Providing **310** the high pressure air may be accomplished according to any example, feature or function presented herein, e.g. with reference to **FIG. 3****.**

The method **300** further comprises controlling **320** the internal pressure **Pᵢ** of the battery pack **110**) to be greater than an ambient air pressure **Pₐ**. Controlling **320** the high pressure air may be accomplished according to any example, feature or function presented herein, e.g. with reference to **FIG. 3****.** In some examples, specifically examples wherein the battery pack **110** comprises the preciously introduced pressure relief valve **117,** controlling **320** the high pressure air may comprise controlling the internal pressure **Pᵢ** of the battery pack **110** to be below the pressure relief threshold **117_{T}** of the pressure relief valve **117,** but above the ambient air pressure **Pₐ**. In some examples, specifically examples wherein the battery pack **110** is a liquid-cooled battery where there is a risk of ruptured or damaged coolant lines **210** leaking coolant directly into the housing **111** (an inner wall of the housing **111** is an outer wall of a coolant line **210**), controlling **320** the high pressure air may comprise controlling the internal pressure **Pᵢ** of the battery pack **110** to be above a predetermined internal pressure **P₂₁₀** of the coolant of the cooling system **200.**

Optionally, in some examples, specifically examples wherein the battery pack **110** comprises the previously introduced controllable outlet valve **118,** the method **300** may further comprise controlling **330** the controllable outlet valve **118** to controllably release air from the battery pack **110.** Controlling **330** the controllable outlet valve **118** may be accomplished according to any example, feature or function presented herein, e.g. with reference to **FIG. 3****.**

The method **300** introduced with reference to **FIG. 5** may be modified to comprise any or all features, examples or functionality presented herein.

In **FIG. 6** a computer program product **400** is shown. The computer program product **400** comprises a computer program **600** and a non-transitory computer readable medium **500.** The computer program **600** may be stored on the computer readable medium **500.** The computer readable medium **500** is, in **FIG. 6****,** exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **600** comprises instruction **610** e.g. program instruction, software code, that, when executed by processing circuitry cause the processing circuitry to perform the method **300** introduced with reference to **FIG. 5****.**

As illustrated in **FIG. 7****,** the computer program **600** may be loaded onto the processing circuitry **120** of the battery system **100.**

In the following, a list of specific examples of embodiments of the present invention are presented. However, the scope of protection is defined in the appended independent claims with preferred embodiments defined in the dependent claims related thereto.

Example 1. A battery system **100** comprising a liquid-cooled battery pack **110** and a compressed air supply **105** connected to a high pressure inlet valve **113** of the battery pack **110** and connectable to an air-controlled brake system **14** of a vehicle **10,** wherein the battery system **100** is configured to control an internal pressure **Pᵢ** of the battery pack **110** to be greater than an ambient air pressure **Pₐ**.

Example 2. The battery system **100** of example 1, wherein the battery pack **110** comprises a pressure relief valve **117** configured to open responsive to the internal pressure **Pᵢ** of the battery pack **110** being above a pressure relief threshold **117_{T}**, and the battery system **100** is further configured to control the internal pressure **Pᵢ** of the battery pack **110** to be below the pressure relief threshold **117_{T}**.

Example 3. The battery system **100** of example 1 or 2, wherein the internal pressure **Pi** of the battery pack **110** is controlled by a pressure reducing valve **119** arranged between and in fluid connection with the compressed air supply **105** and the high pressure inlet valve **113.**

Example 4. The battery system **100** of any one of examples 1 to 3, wherein the high pressure air supply **105** comprises an air dryer **14d.**

Example 5. The battery system **100** of any one of examples 1 to 4, further configured to control the internal pressure **Pᵢ** of the battery pack **110** to be greater than a predetermined internal pressure **P₂₁₀** of a cooling liquid of a cooling system **200** configured to cool the battery pack **110.**

Example 6. The battery system **100** of any one of examples 1 to 5, wherein the battery pack **110** further comprises a controllable outlet valve **118** and the battery system **100** is further configured to control the controllable outlet valve **118** to controllably release air from the battery pack **110.**

Example 7. The battery system **100** of example 6, wherein the controllable outlet valve **118** is arranged at an, during use, vertically lower portion of the battery pack **110** to allow draining of moisture from the battery pack **110.**

Example 8. The battery system **100** of any one of examples 1 to 7, further comprising processing circuitry **120** configured to control the internal pressure **Pᵢ** of the battery pack **110.**

Example 9. The battery system 100 of examples 1, further comprising a pressure relief valve **117** configured to open responsive to the internal pressure **Pᵢ** of the battery pack **110** being above a pressure relief threshold **117_{T}**, and the battery system **100** is further configured to control the internal pressure **Pᵢ** of the battery pack **110** to be below the pressure relief threshold **117_{T}**; the internal pressure **Pi** of the battery pack **110** is controlled by a pressure reducing valve **119** arranged between and in fluid connection with the compressed air supply **105** and the high pressure inlet valve **113;** the high pressure air supply **105** comprises an air dryer **14d;** the battery system **100** is configured to control the internal pressure **Pᵢ** of the battery pack **110** to be greater than a predetermined internal pressure **P₂₁₀** of a cooling liquid of a cooling system **200** configured to cool the battery pack **110;** the battery pack **110** further comprises a controllable outlet valve **118** and the battery system **100** is further configured to control the controllable outlet valve **118** to controllably release air from the battery pack **110;** the controllable outlet valve **118** is arranged at an, during use, vertically lower portion of the battery pack **110** to allow draining of moisture from the battery pack **110;** the battery system further comprising processing circuitry **120** configured to control the internal pressure **Pᵢ** of the battery pack **110.**

Example 10. A vehicle **10,** comprising a battery system **100** of any one of examples 1 to 9 and an air-controlled brake system **14** wherein a reservoir tank **14r** of the air-controlled brake system **14** is operatively connected to the compressed air supply **105** of the battery system **100.**

Example 11. The vehicle **10** of example 10, wherein the vehicle is a heavy-duty vehicle.

Example 12. A method **300** for controlling an internal pressure **Pᵢ** of a liquid-cooled battery pack **110,** the method **300** comprising: providing **310** high pressure air from a compressed air tank **14r** of an air-controlled brake system **14** of a vehicle **10** to a high pressure inlet valve **113** of the battery pack **110,** and controlling **320** the internal pressure **Pᵢ** of the battery pack **110** to be greater than an ambient air pressure **Pₐ**.

Example 13. The method **300** of example 12, wherein the battery pack **110** comprises a pressure relief valve **117** configured to open responsive to the internal pressure **Pᵢ** of the battery pack **110** being above a pressure relief threshold **117_{T}**, and the method **300** further comprises: controlling **320** the internal pressure **Pᵢ** of the battery pack **110** to be below the pressure relief threshold **117_{T}**.

Example 14. The method **300** of example 12 or 13, wherein the battery pack **110** further comprises a controllable outlet valve **118,** and the method **300** further comprising: controlling **330** the controllable outlet valve **118** to controllably release air from the battery pack **110.**

Example 15. The method **300** of any one of examples 12 to 14, further comprising: controlling **320** the internal pressure **Pᵢ** of the battery pack **110** to be greater than a predetermined internal pressure **P₂₁₀** of a cooling liquid of a cooling system **200** configured to cool the battery pack **110.**

Example 16. Processing circuitry **120** configured to cause performance of the method **300** of any one of examples 12 to 15.

Example 17. A battery system **100** comprising a liquid-cooled battery pack **110,** a compressed air supply **105** connected to a compressed air supply of an air-controlled brake system 14 of a vehicle 10, and the processing circuitry **120** of example 16.

Example 18. A computer program product **400** comprising program code **610** for performing, when executed by processing circuitry **120,** the method **300** of any of examples 12 to 15.

Example 19. A non-transitory computer-readable storage medium **500** comprising instructions **610,** which when executed by processing circuitry **120,** cause the processing circuitry **120** to perform the method **300** of any of examples 12 to 15.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery system (**100**) comprising a liquid-cooled battery pack (**110**) and a compressed air supply (**105**) connected to a high pressure inlet valve (**113**) of the battery pack (**110**) and connectable to an air-controlled brake system (**14**) of a vehicle (**10**), wherein the battery system (**100**) is configured to control an internal pressure (**Pᵢ**) of the battery pack (**110**) to be greater than an ambient air pressure (**Pₐ**).

2. The battery system (**100**) of claim 1, wherein the battery pack (**110**) comprises a pressure relief valve (**117**) configured to open responsive to the internal pressure (**Pᵢ**) of the battery pack (**110**) being above a pressure relief threshold (**117_{T}**), and the battery system (**100**) is further configured to control the internal pressure (**Pᵢ**) of the battery pack (**110**) to be below the pressure relief threshold (**117_{T}**).

3. The battery system (**100**) of claim 1 or 2, wherein the internal pressure (P**i**) of the battery pack (**110**) is controlled by a pressure reducing valve (**119**) arranged between and in fluid connection with the compressed air supply (**105**) and the high pressure inlet valve (**113**).

4. The battery system (**100**) of any one of claims 1 to 3, wherein the high pressure air supply (**105**) comprises an air dryer (**14d**).

5. The battery system (**100**) of any one of claims 1 to 4, further configured to control the internal pressure (**Pᵢ**) of the battery pack (**110**) to be greater than a predetermined internal pressure (**P₂₁₀**) of a cooling liquid of a cooling system (**200**) configured to cool the battery pack (**110**).

6. The battery system (**100**) of any one of claims 1 to 5, wherein the battery pack (**110**) further comprises a controllable outlet valve (**118**) and the battery system (**100**) is further configured to control the controllable outlet valve (**118**) to controllably release air from the battery pack (**110**).

7. The battery system (**100**) of claim 6, wherein the controllable outlet valve (**118**) is arranged at an, during use, vertically lower portion of the battery pack (**110**) to allow draining of moisture from the battery pack (**110**).

8. The battery system (**100**) of any one of claims 1 to 7, further comprising processing circuitry (**120**) configured to control the internal pressure (**Pᵢ**) of the battery pack (**110**).

9. The battery system (100) of claims 1, further comprising a pressure relief valve (**117**) configured to open responsive to the internal pressure (**Pᵢ**) of the battery pack (**110**) being above a pressure relief threshold (**117_{T}**), and the battery system (**100**) is further configured to control the internal pressure (**Pᵢ**) of the battery pack (**110**) to be below the pressure relief threshold (**117_{T}**); the internal pressure (**Pi**) of the battery pack (**110**) is controlled by a pressure reducing valve (**119**) arranged between and in fluid connection with the compressed air supply (**105**) and the high pressure inlet valve (**113**); the high pressure air supply (**105**) comprises an air dryer (**14d**); the battery system (**100**) is configured to control the internal pressure (**Pᵢ**) of the battery pack (**110**) to be greater than a predetermined internal pressure (**P₂₁₀**) of a cooling liquid of a cooling system (**200**) configured to cool the battery pack (**110**); the battery pack (**110**) further comprises a controllable outlet valve (**118**) and the battery system (**100**) is further configured to control the controllable outlet valve (**118**) to controllably release air from the battery pack (**110**); the controllable outlet valve (**118**) is arranged at an, during use, vertically lower portion of the battery pack (**110**) to allow draining of moisture from the battery pack (**110**); the battery system further comprising processing circuitry (**120**) configured to control the internal pressure (**Pᵢ**) of the battery pack (**110**).

10. A vehicle (**10**), comprising a battery system (**100**) of any one of claims 1 to 9 and an air-controlled brake system (**14**) wherein a reservoir tank (**14r**) of the air-controlled brake system (**14**) is operatively connected to the compressed air supply (**105**) of the battery system (**100**).

11. The vehicle (**10**) of claim 10, wherein the vehicle is a heavy-duty vehicle.

12. A method (**300**) for controlling an internal pressure (**Pᵢ**) of a liquid-cooled battery pack (**110**), the method (**300**) comprising:
providing (**310**) high pressure air from a compressed air tank (**14r**) of an air-controlled brake system (**14**) of a vehicle (**10**) to a high pressure inlet valve (**113**) of the battery pack (**110**), and
controlling (**320**) the internal pressure (**Pᵢ**) of the battery pack (**110**) to be greater than an ambient air pressure (**Pₐ**).

13. The method (**300**) of claim 12, wherein the battery pack (**110**) comprises a pressure relief valve (**117**) configured to open responsive to the internal pressure (**Pᵢ**) of the battery pack (**110**) being above a pressure relief threshold (**117_{T}**), and the method (**300**) further comprises:
controlling (**320**) the internal pressure (**Pᵢ**) of the battery pack (**110**) to be below the pressure relief threshold (**117_{T}**).

14. The method (**300**) of claim 12 or 13, wherein the battery pack (**110**) further comprises a controllable outlet valve (**118**), and the method (**300**) further comprising:
controlling (**330**) the controllable outlet valve (**118**) to controllably release air from the battery pack (**110**).

15. The method (**300**) of any one of claims 12 to 14, further comprising:
controlling (**320**) the internal pressure (**Pᵢ**) of the battery pack (**110**) to be greater than a predetermined internal pressure (**P₂₁₀**) of a cooling liquid of a cooling system (**200**) configured to cool the battery pack (**110**).
